# EUROPEAN PATENT APPLICATION

(11) **EP 3 382 579 A1**
(43) Date of publication of application: **03.10.2018**
(21) Application number: 18164820.5
(22) Date of filing: 29.03.2018
(51) Int. Cl.: G06F 17/30

(54) **INFORMATION PROCESSOR AND INFORMATION PROCESSING METHOD**

(30) Priority: 30.03.2017 JP 2017068327; 30.03.2017 JP 2017068328
(71) Applicant: KYOCERA Document Solutions Inc., Osaka-shi, Osaka 540-8585 (JP)
(72) Inventor: SAKAGUCHI, Shoichi, Osaka-shi, Osaka 540-8585 (JP); NAGIRA, Jiro, Osaka-shi, Osaka 540-8585 (JP); NISHINO, Tetsuya, Osaka-shi, Osaka 540-8585 (JP); YOSHIOKA, Tetsuya, Osaka-shi, Osaka 540-8585 (JP); TANAKA, Yoshihisa, Osaka-shi, Osaka 540-8585 (JP); YOSHIOKA, Yoshiki, Osaka-shi, Osaka 540-8585 (JP)
(74) Representative: BRP Renaud & Partner mbB Rechtsanwälte Patentanwälte Steuerberater

(57) **Abstract**

An information processor (10) according to this embodiment includes: a communication section (140), a reception section (103), a communication control section (102), a storage section (130), and a storage control section (105). The communication section (140) transmits and receives data to and from an external server (20). The reception section (103) receives an instruction from a user. The communication control section (102) is a communication control section controlling data communication operation performed by the communication section (140) and causing the communication section (140) to receive, from the server (20), data which is included in a plurality of pieces of data stored in the server (20) and which is specified by the instruction received by the reception section (103). The storage control section (105) causes the storage section (130) to store the data received from the server (20) by the communication section (140). In a case where the data received by the communication section (140) is data received from a predefined server (20), the data is deleted from the storage section (130) when predefined time has passed since predefined processing was performed on the data.

## Description

### BACKGROUND

The present invention relates to an information processor and an information processing method.

In recent offices, a corporate network has been constructed in which a server, a personal computer (PC) used by an individual, an image forming apparatus, etc. are connected to a network such as a local area network (LAN). The individual can receive (download) desired data in his or her PC through access to the server, thereby realizing, for example, smooth corporate data sharing.

### SUMMARY

A technology obtained by further improving the technology described above will be suggested as one aspect of the present invention.

An information processor includes: a communication section, a reception section, a communication control section, a storage section, and a storage control section as one aspect of the present invention. The communication section transmits and receives data to and from an external server. The reception section receives an instruction from a user. The communication control section is a communication control section controlling data communication operation performed by the communication section, and causes the communication section to receive, from the server, data which is included in a plurality of pieces of data stored in the server and which is specified by the instruction received by the reception section. The storage control section causes the storage section to store the data received from the server by the communication section. In a case where the data received by the communication section is data received from a predefined server, the storage control section deletes the data from the storage section when predefined time has passed since predefined processing was performed on the data.

An information processing method according to one aspect of the present invention is an information processing method of controlling an information processor including a storage section and a communication section capable of transmitting and receiving data to and from an external server. The information processing method includes: a reception step of receiving an instruction from a user; a communication control step of controlling data communication operation performed by the communication section and causing the communication section to receive, from the server, data which is included in a plurality of pieces of data stored in the server and which is specified by the instruction received in the reception step; and a storage control step of causing the storage section to store the data received from the server by the communication section. In the storage control step, in a case where the data received by the communication section is data received from a predefined server, the data is deleted from the storage section when predefined time has passed since the data was stored into the storage section.

An information processing method according to one aspect of the present invention is an information processing method controlling an information processor including a storage section, a display section, and a communication section capable of transmitting and receiving data to and from an external server. The information processing method includes: a reception step of receiving an instruction from a user; a communication control step controlling data communication operation performed by the communication section, the communication control step causing the communication section to receive, from the server, the data which is included in a plurality of pieces of data stored in the server and which is specified by the instruction received in the reception step; a storage control step of causing the storage section to store the data received from the server by the communication section; and a display control step of controlling display operation performed by the display section and causing the display section to display a display screen indicating the data specified by the instruction received in the reception step. In the storage control step, in a case where the data received by the communication section is data received from a predefined server, the data is deleted from the storage section upon passage of predefined time from a time point at which the display screen indicating the data was displayed at the display section.

### BRIEF DESCRIPTION OF THE DRAWINGS

Fig. 1 is a view illustrating schematic configuration of an information processing system according to a first embodiment of the present invention.
Fig. 2 is a block diagram illustrating inner configuration of an information processor and a server according to the first embodiment of the present invention.
Fig. 3 is a diagram illustrating an outline of details of processing performed in the information processing system according to the first embodiment of the present invention.
Fig. 4 is a view illustrating one example of an operation screen displayed at a display section of the information processor according to the first embodiment of the present invention.
Fig. 5 is a flowchart illustrating a flow of operation of the information processor according to the first embodiment of the present invention.
Fig. 6 is a diagram illustrating one example of information stored in a storage section of the information processor according to the first embodiment of the present invention.
Fig. 7 is a diagram illustrating one example of changes in data stored in the storage section of the information processor according to the first embodiment of the present invention.
Fig. 8 is a flowchart illustrating a flow of operation performed by an information processor according to a second embodiment of the present invention.
Fig. 9 is a diagram illustrating one example of changes in data stored in a storage section of the information processor according to the second embodiment of the present invention.
Fig. 10 is a flowchart illustrating a flow of operation performed by an information processor according to a third embodiment of the present invention.
Fig. 11 is a diagram illustrating one example of changes in data stored in a storage section of the information processor according to the third embodiment of the present invention.
Figs. 12A, 12B, and 12C are diagrams each illustrating one example of data stored in a storage section of a server according to a fourth embodiment of the present invention.
Fig. 13 is a flowchart illustrating a flow of operation performed by an information processor and the server according to the fourth embodiment of the present invention.
Fig. 14 is a view illustrating one example of an operation screen displayed at a display section of the information processor according to the fourth embodiment of the present invention.
Fig. 15 is a flowchart illustrating a flow of operation performed by an information processor according to a fifth embodiment of the present invention.
Fig. 16 is a view illustrating one example of an operation screen displayed at a display section of the information processor according to the fifth embodiment of the present invention.
Fig. 17 is a view illustrating one example of data stored in a server according to the fifth embodiment of the present invention.
Figs. 18A and 18B are views illustrating an outline of operation performed by an information processor and a server according to a sixth embodiment of the present invention.
Fig. 19 is a flowchart illustrating a flow of operation performed by the information processor and the server according to the sixth embodiment of the present invention.
Fig. 20 is a diagram illustrating one example of information stored in a storage section of the information processor according to the sixth embodiment of the present invention.
Fig. 21 is a flowchart illustrating a flow of operation performed by an information processor and a server according to a seventh embodiment of the present invention.
Fig. 22 is a diagram illustrating one example of associated information previously stored in a storage section of the server according to the seventh embodiment of the present invention.
Fig. 23 is a view illustrating one example of an operation screen displayed at a display section of the information processor according to the seventh embodiment of the present invention.
Fig. 24 is a diagram illustrating one example of associated information previously stored in a storage section of a server according to a supplement of the seventh embodiment of the present invention,

### DETAILED DESCRIPTION

Hereinafter, an information processor, an information processing system, and an information processing method according to one embodiment of the present invention will be described with reference to drawings.

### <First Embodiment>

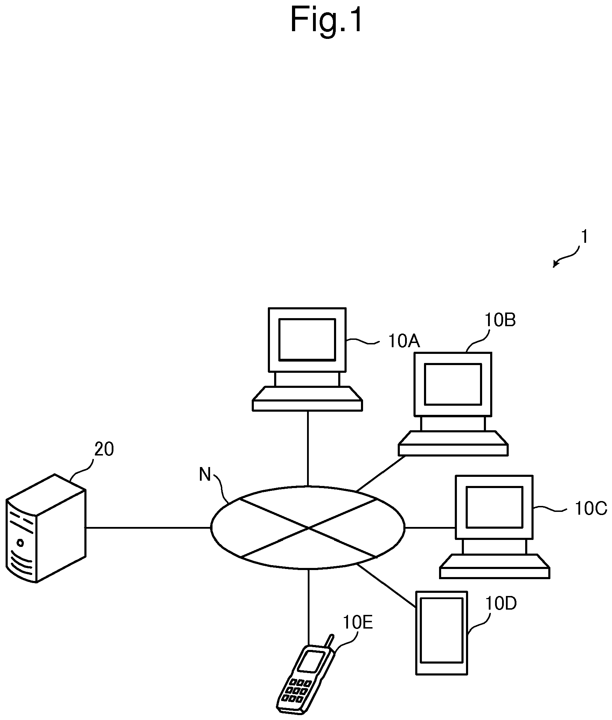

Fig. 1 is a view illustrating schematic configuration of an information processing system according to a first embodiment of the present invention. An information processing system 1 is composed of: a plurality of information processors such as a PC 10A, a PC 10B, and a PC 10C, a smartphone 10D, and a mobile terminal 10E; and a server 20 connected to the information processors via a network N such as a LAN or a wide area network (WAN). Note that two or more servers may be connected to the network N although only one server is drawn in an example illustrated in Fig. 1. The PC 10A, the PC10B, the PC 10C, the smartphone 10D, and the mobile terminal 10E are each one example of the information processor provided with a storage section, a control unit, etc. to be described below, and are collectively described as an information processor 10 unless specifically and separately described below.

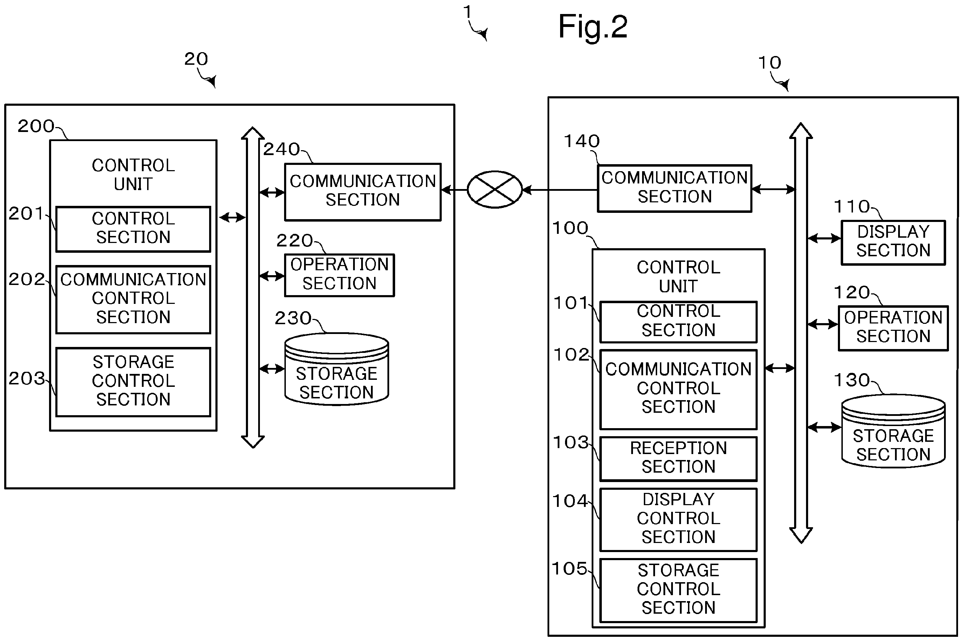

Fig. 2 is a block diagram illustrating inner configuration of the information processor 10 and the server 20. The information processor 10 includes: a display section 110, an operation section 120, a storage section 130, a communication section 140, a control unit 100, etc.

The display section 110 includes a liquid crystal display (LCD) or an organic light-emitting diode (OLED) display, and displays various operation screens, etc. under display control performed by a display control section to be described below.

The operation section 120 is an input device such as any of a mouse, a keyboard, a touch panel which is provided on a front surface of the display section 110, etc. Instructions provided from a user for various types of operation and processing executable by the information processor 10 are inputted by using the operation section 120 such as any of the mouse, keyboard, touch panel, etc. described above.

The storage section 130 is a storage device such as an HDD or a flash memory. The storage section 130 includes a plurality of storage regions, in each of which various pieces of data are stored. In this embodiment, the storage section 130 includes, as the plurality of storage regions, a plurality of directories such as a route directory and a subdirectory located below the route directory.

The communication section 140 is a communication interface which includes a communication module such as a LAN chip. The communication section 140 permits the information processor 10 to make communication with the server 20 connected thereto via the network N.

The control unit 100 includes: a processor, a random access memory (RAM), a read only memory (ROM), and a dedicated hardware circuit. The processor is, for example, a central processing unit (CPU), a field programmable gate array (FPGA), or an application specific integrated circuit (ASIC). The control unit 100 functions as a control section 101, a communication control section 102, a reception section 103, a display control section 104, and a storage control section 105 through operation performed by the processor in accordance with an operating system (OS) and programs such as various control programs stored (installed) in the storage section 130. Note that each of the aforementioned configurations may be formed respectively by hardware circuits without depending on the operation performed by the control unit 100 in accordance with the program.

The reception section 103 has a function of receiving a signal outputted from the operation section 120 and receiving the instruction provided from the user by using the operation section 120.

The control section 101 is in charge of overall control of the information processor 10. In particular, the control section 101 has a function of executing the various programs such as word-processing software and spreadsheet software, which are stored in the storage section 130, in accordance with the instructions received by the reception section 103.

The display control section 104 has a function of controlling display operation performed by the display section 110, and causes the display section 110 to display, for example, the operation screen indicating results of information processing performed by the control section 101.

For example, in a case where the reception section 103 has received press operation performed on an icon associated with document data displayed at the display section 110, the control section 101 executes the program of the word-processing software. Then the display control section 104 causes the display section 110 to display the operation screen indicating the document data associated with an icon created through the execution of the word-processing software.

The communication control section 102 has a function of controlling data communication operation performed by the communication section 140. In particular, the communication control section 102 causes the communication section 140 to receive, from the server 20, data which is included in a plurality of pieces of data stored in the server 20 and which is specified by the instruction received by the reception section 103.

The storage control section 105 has a function of controlling data storage operation performed by the storage section 130. In particular, the storage control section 105 causes the storage section 130 to store the data received from the server 20 by the communication section 140, and performs storage control of data generated or changed by the control section 101.

Next, configuration of the server 20 will be described. The server 20 includes a control unit 200, an operation section 220, a storage section 230, a communication section 240, etc. The operation section 220 is an input device such as any of a mouse, a keyboard, a touch panel which is provided on a front surface of a display section, etc. The storage section 230 is a storage device such as an HDD or a flash memory. The communication section 240 is a communication interface which includes a communication module such as an LAN chip. Note that the server 20 may include a display section formed of a liquid crystal display or an organic EL display.

The control unit 200 includes a processor, a RAM, a ROM, and a dedicated hardware circuit. The control unit 200 functions as a control section 201, a communication control section 202, and a storage control section 203 through operation performed by the processor in accordance with programs stored in the storage section 230. Note that, however, each of the aforementioned configurations may be formed respectively by hardware circuits without depending on the operation performed by the control unit 200 in accordance with the programs.

The control section 201 is in charge of overall operation control of the server 20. The communication control section 202 has a function of controlling data communication operation performed by the communication section 240. The storage control section 203 has a function of controlling storage operation performed by the storage section 230.

The configuration of the information processing system 1 has been described above. Next, details of processing performed in the information processing system 1 composed of the information processor 10 and the server 20 described above will be described.

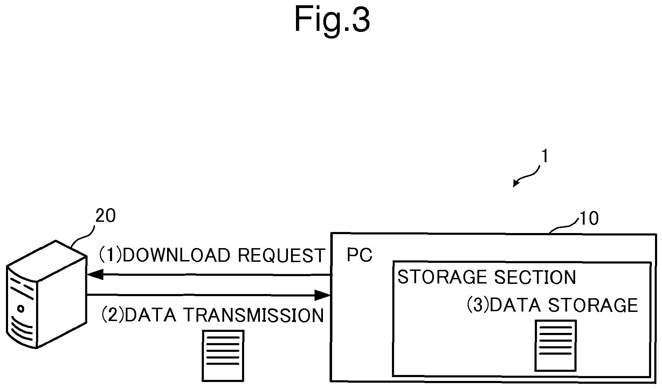

Fig. 3 is a view illustrating an outline of the details of the processing performed in the information processing system 1. As illustrated in (1) of this figure, the communication control section 102 of the information processor 10 causes the communication section 140 to transmit, to the server 20, a download request which specifies data indicated by the instruction received by the reception section 103. Next, as illustrated in (2) of Fig. 3, the communication control section 202 of the server 20 causes the communication section 240 to transmit, to the information processor 10, the data which is included in pieces of data stored in the storage section 230 and which is specified by the download request. Then as illustrated in (3) of Fig. 3, the storage control section 105 of the information processor 10 causes the storage section 130 to store the data received by the communication section 140 and transmitted from the server 20. At this point, the storage control section 105 causes the storage section 130 to store the data into the storage region (directory) of the storage section 130 indicated by the instruction received by the reception section 103.

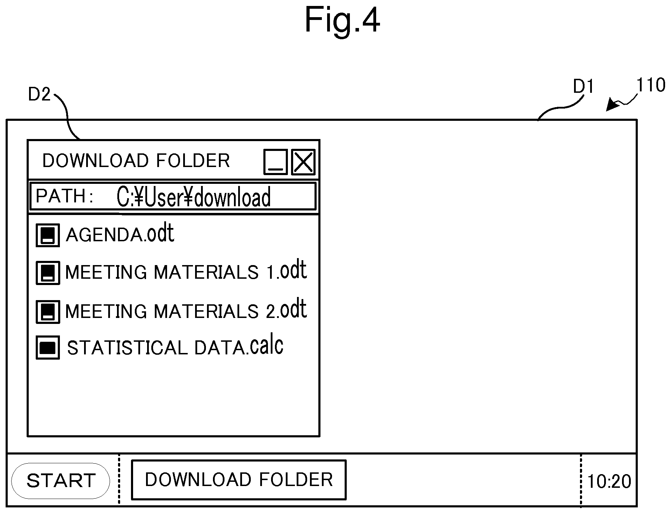

Fig. 4 is a view illustrating one example of the operation screen displayed at the display section 110. Fig. 4 illustrates the operation screen displayed at the display section 110 when the control section 101 has executed a file browser software stored in the storage section 130. In the example illustrated in Fig. 4, an operation screen D2 as results of processing of the file browser software is displayed on a desktop screen D1. The operation screen D2 indicates: a pass "C:¥User¥download" indicating a position of the directory in the storage section 130; and a plurality of icons associated with various pieces of data (files) included in the directory.

A download folder illustrated in Fig. 4 stores the data received (downloaded) from the server 20. Upon completing the storage of the data downloaded from the server 20, the icon associated with the downloaded data is displayed at the display section 110 under control by the display control section 104. Moreover, in case where the data has been deleted from the storage section 130 under control by the storage control section 105 after a data deletion instruction was received by the reception section 103, the icon associated with the deleted data is deleted from the operation screen D2 under control by the display control section 104.

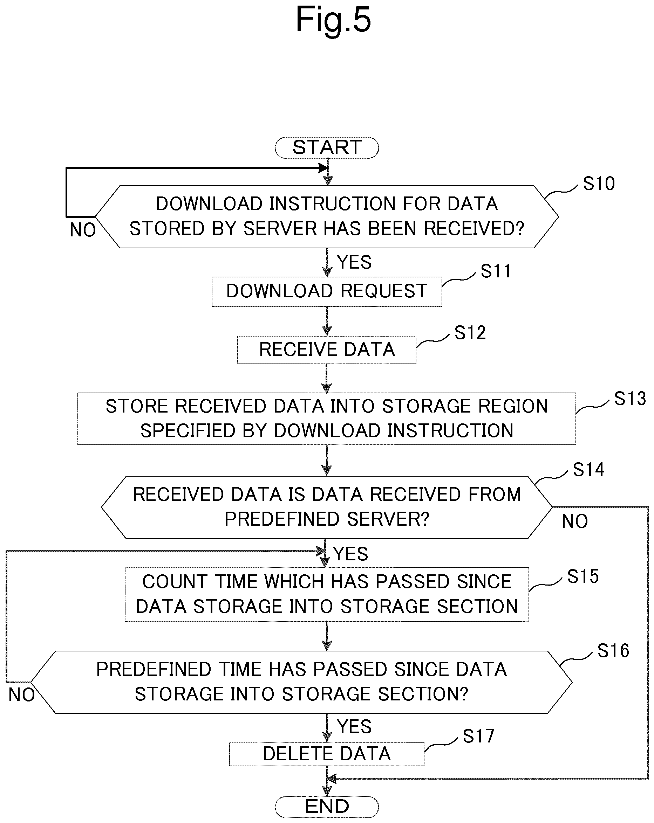

Referring to a flowchart illustrated in Fig. 5, the details of processing performed in the information processor 10 will be further described in detail. When the reception section 103 has received a download instruction for the data stored in the server 20 (YES in step S10), the communication control section 102 causes the communication section 140 to transmit a download request to the server 20 (step S11). Next, the communication control section 102 causes the communication section 140 to receive the data transmitted from the server 20 (step S12). Then the storage control section 105 causes the data received by the communication section 140 in processing of step S12 to be stored into the storage region of the storage section 130 indicated by the instruction received by the reception section 103 (step S13).

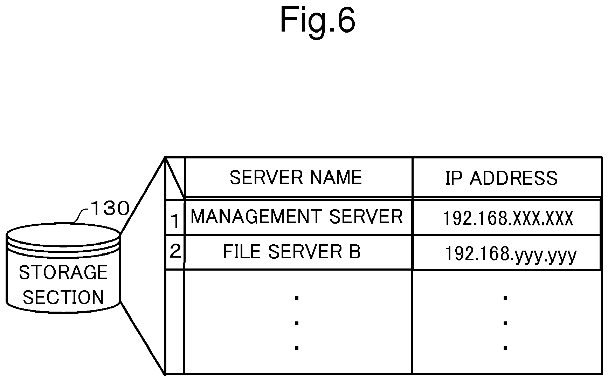

After processing of step S13, the storage control section 105 determines whether or not the data received by the communication section 140 in the processing of step S12 is data received from the predefined server 20 (step S14). Here, as illustrated in Fig. 6, the storage section 130 previously stores information indicating the predefined server 20 described above. In an example illustrated in Fig. 6, the information indicating the predefined server 20 is composed of: server names; and IP addresses as information for identifying this predefined server 20 on the network N. The storage control section 105 performs processing of step S14 described above with reference to the aforementioned information stored in the storage section 130.

In a case where the data received by the communication section 140 is not the data received from the predefined server 20 (NO in step S14), the information processor 10 ends the processing. On the other hand, in a case where the data received by the communication section 140 is the data received from the predefined server 20 (YES in step S14), the storage control section 105 performs processing of steps S15 to S17 below.

In the processing of step S15, the storage control section 105 count time which has passed from a time point at which the data downloaded from the server 20 was stored into the storage section 130. Then when the counted time has reached predefined time (YES in step S16), the storage control section 105 performs processing of deleting the aforementioned data from the storage section 130 (step S17).

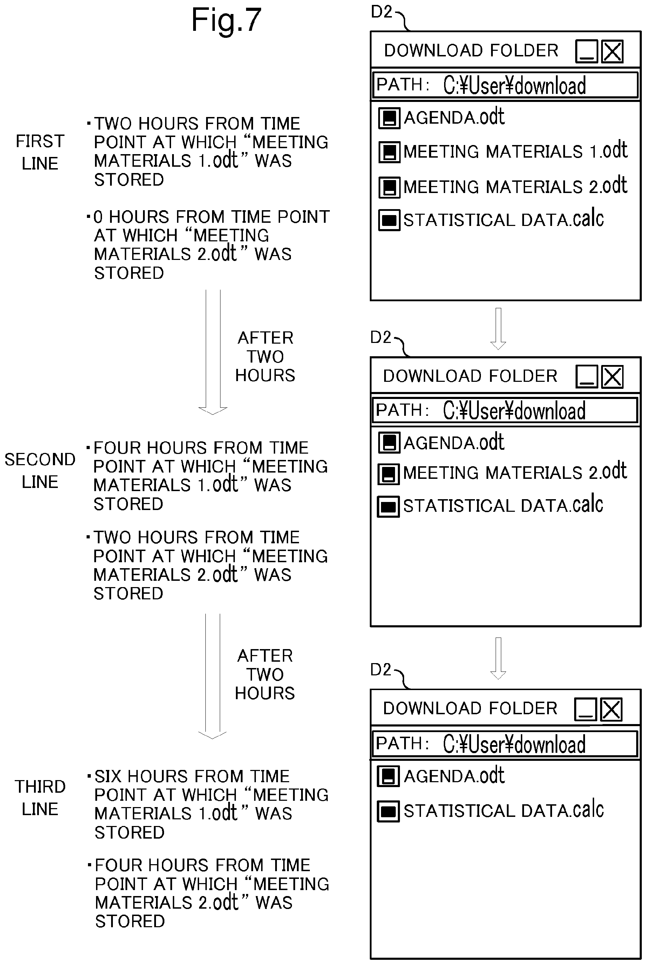

Fig. 7 is a diagram illustrating one example of changes in the data stored in the storage section 130. A first line of this figure illustrates the operation screen D2 provided at a time point at which "Meeting materials 2.odt" is stored into the storage section 130. Two hours before the time point at which this "Meeting materials 2.odt" was stored into the storage section 130, "Meeting materials 1.odt" is stored in the storage section 130.

A second line of Fig. 7 illustrates a state in which two hours has passed from a state illustrated in the first line. In this state, four hours as predefined time has passed from a time point at which the "Meeting materials 1.odt" was stored into the storage section 130. Then since the four hours as the predefined time has passed from the time point at which the "Meeting materials 1.odt" was stored into the storage section 130, the storage control section 105 causes the "Meeting materials 1.odt" to be deleted from the storage section 130. As a result, the icon associated with the "Meeting materials 1.odt" is deleted from the operation screen D2.

A third line of Fig. 7 illustrates a state in which two hours further has passed from the state illustrated in the second column. In this state, four hours as predefined time has passed from the time point at which the "Meeting materials 2.odt" was stored into the storage section 130. Then since the four hours as the predefined time has passed from the time point at which the "Meeting materials 2.odt" was stored into the storage section 130, the storage control section 105 causes the "Meeting materials 2.odt" to be deleted from the storage section 130. As a result, the icon associated with the "Meeting materials 2.odt" is deleted from the operation screen D2.

Here, for example, meeting materials may become unnecessary data for an individual concerned after ending of a meeting. Storing, into the predefined server 20, the data not permanently important for such an individual and letting the data downloaded from each information processor 10 connected to the network N consequently deletes this data from the storage section 130 after passage of predefined time. Consequently, it is possible for an individual to unintentionally delete, on an information processor 10 side, the data downloaded from the server 20 into the individual's information processor 10 in a case where this data turns to be less important. However, even the data deleted from the individual's information processor 10 is continuously stored in the server 20, so that the data can also be downloaded again from the server 20 when necessary.

### <Second Embodiment>

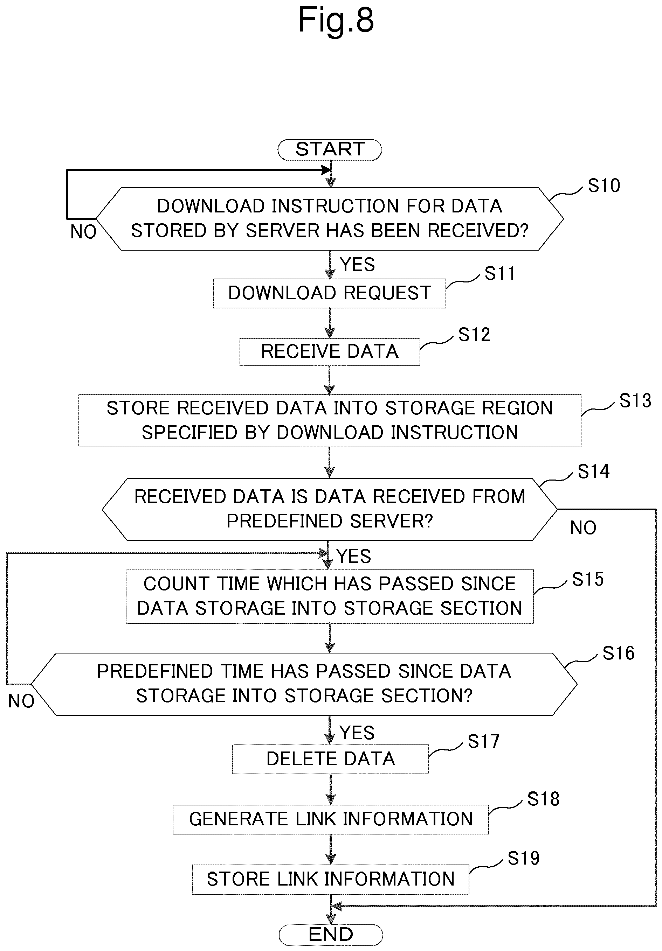

Fig. 8 is a flowchart illustrating a flow of operation performed by an information processor 10 according to a second embodiment. Note that any processing details of which are same as those of the flowchart illustrated in Fig. 5 is provided with the same numeral and omitted from the description.

The information processor 10 according to the second embodiment executes processing of steps S18 and S19 after data the deletion processing of step S17.

In the processing of step S18, the storage control section 105 generates link information permitting access to data which is same as the data deleted from the storage section 130 and which is stored in the server 20. Here, the link information is information which permits identification of a position of the server 20 on the network N and a storage position of the data in the server 20, for example, hyper link including a shortcut and a uniform resource locator (URL) indicating the position of the server 20. Then in the processing of step S19, the storage control section 105 causes the aforementioned link information to be stored into the storage region of the storage section 130 where the deleted data was stored.

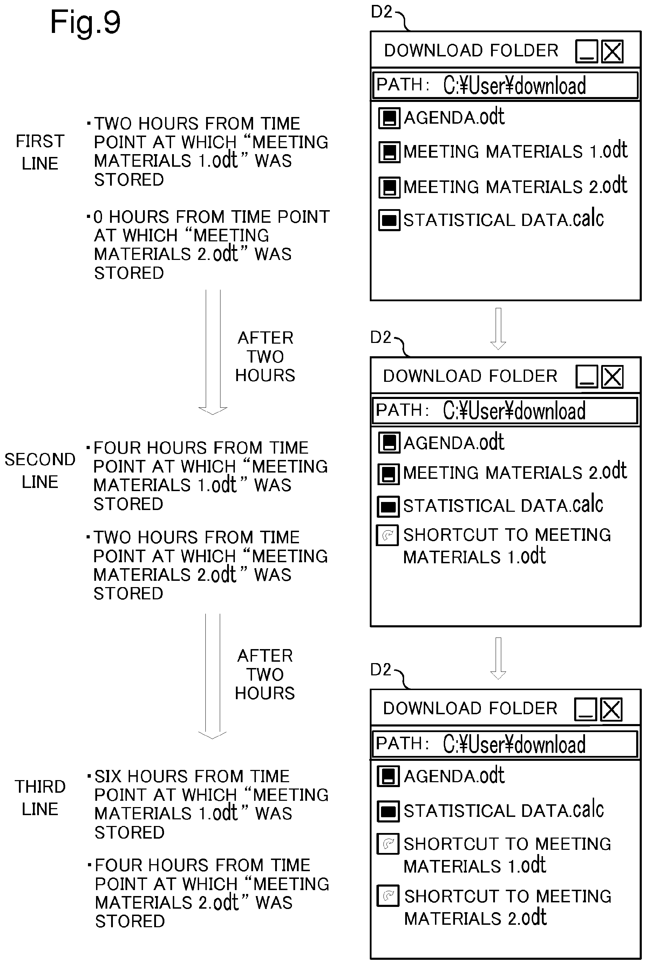

Fig. 9 is a diagram illustrating changes in the data stored in the storage section 130. As illustrated in a second line of this figure, in a case where the data of the "Meeting materials 1.odt" has been deleted from the storage section 130, the link information (shortcut) which permits access to the data of the "Meeting materials 1.odt" in the server 20 is generated at the same storage position as that of the deleted data. Moreover, as illustrated in a third line of this figure, in a case where the data of the "Meeting materials 2.odt" has been deleted from the storage section 130, the link information which permits access to the data of the "Meeting materials 2.odt" in the server 20 is generated at the same storage position as that of the deleted data.

As described above, with the information processor 10 according to the second embodiment of the present invention, even in a case where the data downloaded from the server 20 is deleted from the individual's information processor 10, the individual can easily get access to the original data on the server 20 later on.

For example, even the data downloaded from the server onto the individual's PC is not permanently important for the individual in many cases. For example, meeting materials may become unnecessary data for the individual after a meeting. Leaving such data stored on the individual's PC raises a problem that this not only weights on storage capacity of the individual's PC but also complicates data management, leading to difficulties in searching for really most important data.

With this embodiment, it is possible for an individual to unintentionally delete data downloaded from the server 20 into the individual's information processor 10 when this data has become less important.

### <Third Embodiment

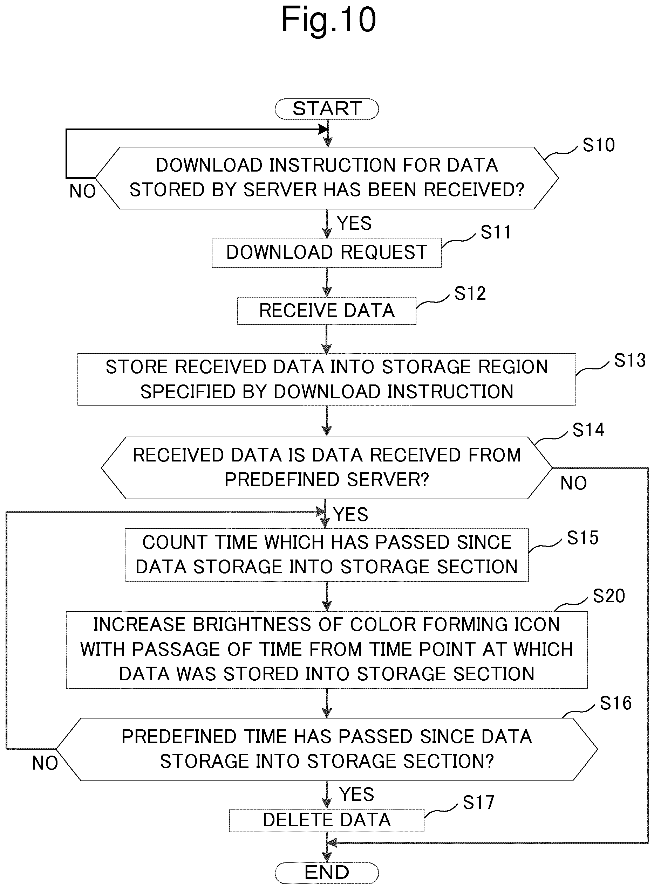

Fig. 10 is a flowchart illustrating a flow of operation performed by the information processor 10 according to the third embodiment. Note that any processing details of which are same as those of the flowchart illustrated in Fig. 5 is provided with the same numeral and is omitted from the description.

In the information processor 10 according to the third embodiment, after processing of counting time which has passed since the data was stored into the storage section 130 in step S15, with time passage from a time point at which the data was stored into the storage section 130, the display control section 104 changes a display mode of the icon associated with this data displayed at the display section 110 (step S20).

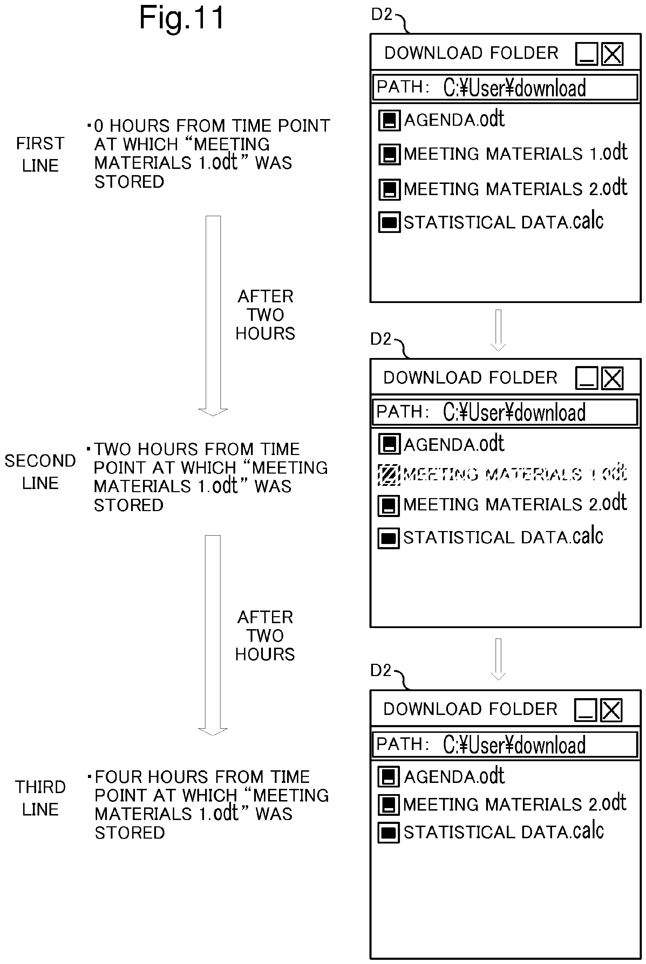

Fig. 11 is a diagram illustrating one example of changes in the data stored in the storage section 130. A first line of this figure illustrates the operation screen D2 provided at the time point at which the "Meeting materials 1.odt" was stored into the storage section 130. A second line of this figure illustrates a state provided after passage of two hours from a state illustrated in the first line. In this state, as illustrated by dotted lines in the figure, the display control section 104 increases brightness of a color forming the icon associated with the "Meeting materials 1.odt" from the state illustrated at the first line of this figure. The third line of this figure illustrates a state provided after passage of another two hours from the state illustrated in the second line, resulting in a state in which four hours as predefined time has passed from the time point at which the "Meeting materials 1.odt" was stored into the storage section 130. In this state, the "Meeting materials 1.odt" has been deleted from the storage section 130 and the icon associated with the "Meeting materials 1.odt" has also been deleted from the operation screen D2.

As described above, the display mode of the icon is changed by increasing the brightness of the color forming the icon with passage of time from the time point at which the data was stored into the storage section 130 in the example described above. Consequently, it is possible to report the user of approximate time required until the data deletion. Note that the display control section 104 may change the display mode by decreasing a size of the icon with passage of time from the time point at which the data was stored into the storage section 130.

Moreover, in a case where the reception section 103 has received predefined operation (for example, double clicking) performed on the icon, the display control section 104 may perform processing of returning the display mode of the icon to the display mode provided at the time point at which the data was stored into the storage section 130. In this case, the storage control section 105 returns, to 0, the time counted in step S15 (resets the counted time). Consequently, the data is deleted from the storage section 130 not upon passage of the predefined time from the time point at which the data was stored into the storage section 130 but upon passage of predefined time from the predefined operation described above. Thus, the user can perform the predefined operation described above to thereby extend the time required until the data deletion.

### <Fourth Embodiment>

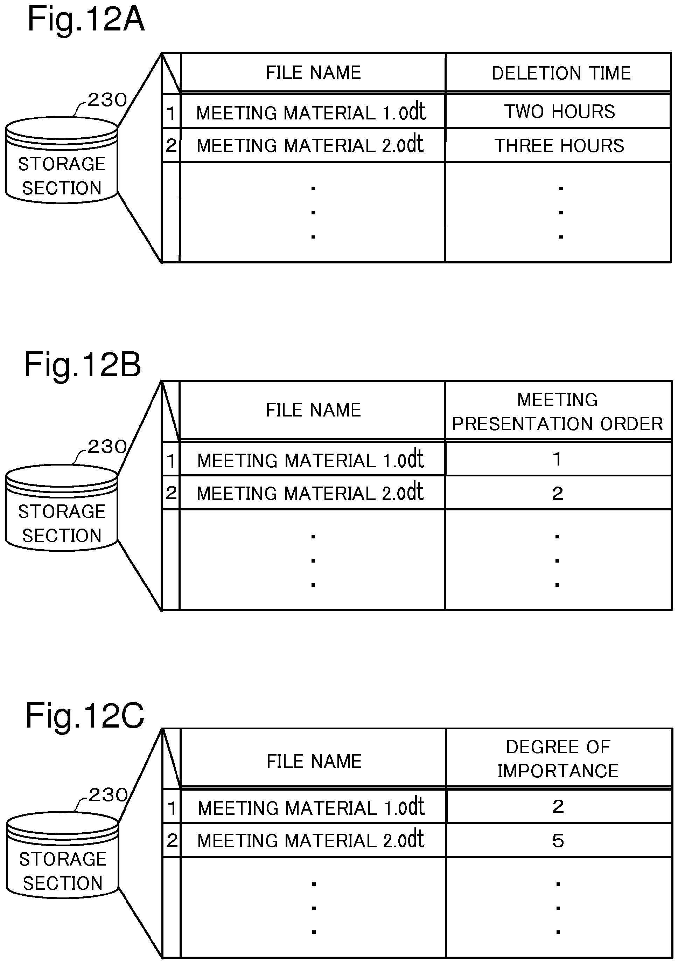

Figs. 12A to 12C are diagrams each illustrating one example of data stored in a storage section 230 of a server 20 according to the fourth embodiment. In the fourth embodiment, information for determining data deletion time is stored in the storage section 230 of the server 20 in association with the data. In the example illustrated in Fig. 12A, names of the data and deletion time for the data are stored in the storage section 230 on an individual data basis. In the example illustrated in Fig. 12B, the names of the data and order of presentation of the data in a meeting are stored in the storage section 230 on an individual data basis. In the example illustrated in Fig. 12C, information indicating the names of the data and degrees of importance of the data are stored in the storage section 230 on an individual data basis. The aforementioned information is transmitted together with the data from the server 20 to the information processor 10, and the data deletion time is determined based on the transmitted information described above in the information processor 10.

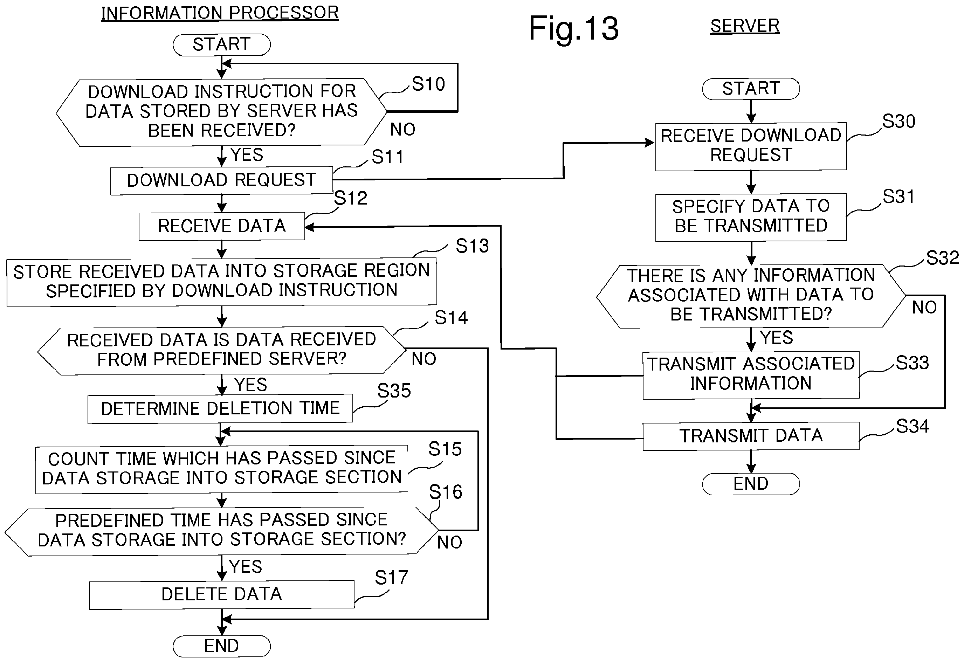

Fig. 13 is a flowchart illustrating a flow of operation performed by the information processor 10 and the server 20 according to the fourth embodiment. Note that any processing details of which are same as those of the flowchart illustrated in Fig. 5 is provided with the same numeral and is omitted from the description.

Upon receiving the download request transmitted from the information processor 10 by the communication section 240 of the server 20 (step S30), the communication control section 202 of the server 20 specifies data to be transmitted indicated by the download request (step S31). Then in a case where there is any information associated with the specified data described above (YES in step S32), the communication control section 202 of the server 20 causes the communication section 240 to transmit the information associated with the data together with this data (steps S33 and S34). On the other hand, in a case where there is no information associated with the specified data described above (NO in step S32), the communication control section 202 of the server 20 causes the communication section 240 to transmit only the specified data (step S34).

In a case where the information is associated with the transmitted data, that is, in a case where the aforementioned information has been transmitted together with the data from the server 20, the storage control section 105 of the information processor 10 performs processing of determining the data deletion time based on the aforementioned information received by the communication section 140 (step S35).

For example, in a case where the information indicating the degree of importance as illustrated in Fig. 12C has been transmitted from the server 20, the storage control section 105 of the information processor 10 determines longer time as the data deletion time with an increase in the degree of importance indicated by this information. In a case where the information indicating the data deletion time as illustrated in Fig. 12A has been transmitted from the server 20, the storage control section 105 of the information processor 10 determines the time indicated by this information as the data deletion time. In a case where the information indicating the order of presentation of the data in the meeting as illustrated in Fig. 12B has been transmitted from the server 20, the storage control section 105 of the information processor 10 determines longer time as the data deletion time with delay in the order indicated by this information.

As described above, with the information processor 10 and the server 20 according to the fourth embodiment of the present invention, different deletion times can be provided for the respective pieces of data stored in the server 20, and the data can be deleted from the storage section 130 in the deletion time suitable for this data.

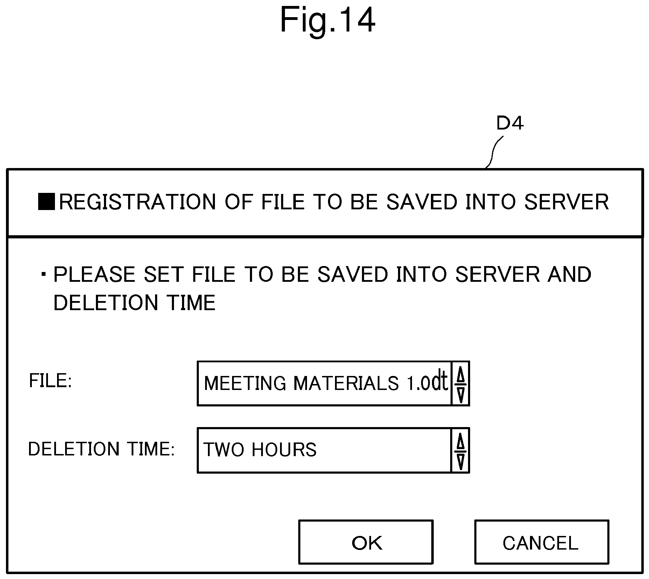

Moreover, the information processor 10 may display an operation screen D4 as illustrated in Fig. 14 at the display section 110 under control by the display control section 104. The storage control section 105 generates information for determining the data deletion time based on operation received by the reception section 103 on this operation screen. Then the communication control section 102 transmits this generated information described above to the server 20, causing the storage section 230 of the server 20 to store the data. Consequently, time for which the data stored in the server 20 is deleted on an information processor 10 side can be determined on the information processor 10 side.

### <Fifth Embodiment

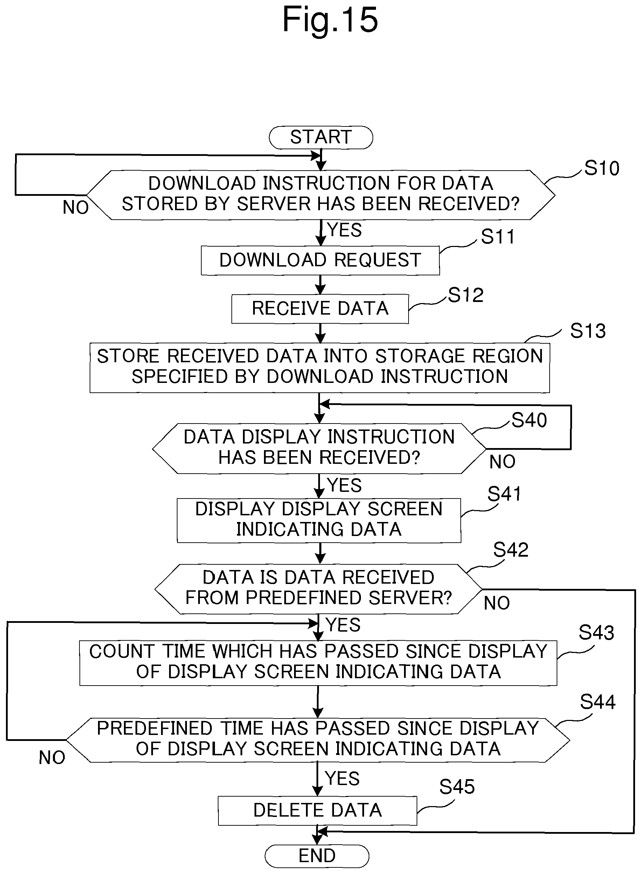

Fig. 15 is a flowchart illustrating a flow of operation performed by an information processor 10 according to the fifth embodiment. Note that any processing details of which are same as those of the flowchart illustrated in Fig. 5 is provided with the same numeral and is omitted from the description.

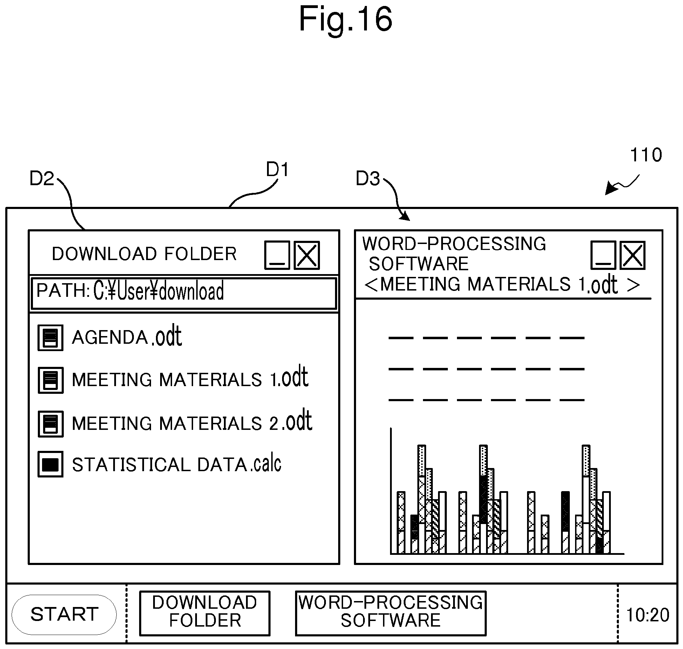

After the processing of step S13, in a case where the reception section 103 has received a data display instruction for the data stored into the storage section 130 in step S13 (YES in step S40), the display control section 104 causes the display section 110 to display the display screen indicating this data (step S41). In an example illustrated in Fig. 16, a display screen D3 indicating the data of the "Meeting materials 1.odt" is displayed at the display section 110 through selection operation performed on the icon associated with the "Meeting materials 1.odt".

Then in a case where the data displayed in the processing of step S41 is data received from the predefined server 20 (YES in step S42), the storage control section 105 counts time which has passed from a time point at which the display section 110 displayed the display screen indicating the data (step S43). Then when the counted time has reached predefined time or longer (YES in step S44), the storage control section 105 performs processing of deleting the aforementioned data from the storage section 130 (step S45).

As described above, with the information processor 10 according to the fifth embodiment of the present invention, since the data is deleted at timing at which the predefined time has passed from a time point at which the user viewed the data, it is possible to avoid a situation that the data is deleted without being viewed even once after downloaded.

### <Supplement 1>

The display section 110 cannot display all details of the data at a time due to a limited displayable screen size in some cases, in which cases a display screen indicating the partial details of the data as illustrated in Fig. 16 is displayed at the display section 110. As in the processing of step S43 described above, without simply counting the time which has passed from the time point at which the display screen indicating the icon of the data was displayed at the display section 110, the storage control section 105 may count, as the passed time, time which has passed from the time point at which the display screen indicating the predefined partial details of the data (for example, D3 of Fig. 16) was displayed at the display section 110.

Moreover, the storage control section 105 performs processing of specifying whether or not the data indicated on the display screen includes the predefined partial data. More specifically, the storage control section 105 determines whether or not the data indicated on the display screen includes predefined specific information, for example, characters (for example, "Summary" or "Conclusion"). In a case where the data includes the predefined characters, the storage control section 105 specifies that the data indicated on the display screen includes the predefined partial data. Moreover, the storage control section 105 may determine whether or not the data indicated on the display screen includes image data as the aforementioned specific information. In a case where the image data is included, the storage control section 105 may specify that the data indicated on the display screen includes the predefined partial data. Without simply counting the time which has passed from the time point at which the display screen indicating the icon of the data was displayed at the display section 110, the storage control section 105 may count, as the passed time, time which has passed from a time point at which the display screen indicating the specific information was displayed at the display section 110.

Through the processing described above, the data can be deleted at timing at which the predefined time has passed not simply from the time point at which the user viewed the data but from a time point at which the user viewed an important portion of the data.

### <Supplement 2>

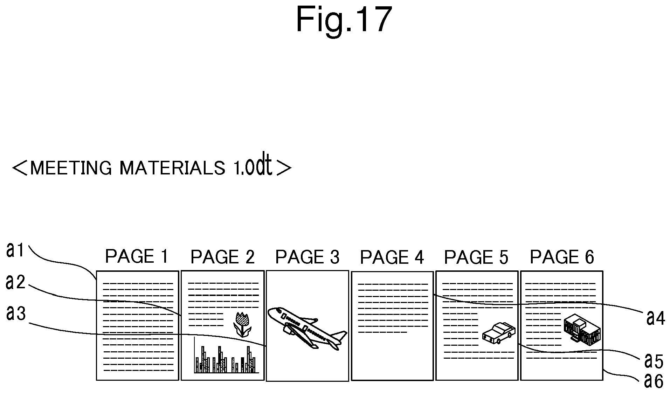

As illustrated in Fig. 17, the data stored in the server 20 may be composed of a plurality of pages. In an example illustrated in this figure, the data of the "Meeting materials 1.odt" is composed of six pages including a1 to a6.

In this case, the storage control section 105 performs processing of specifying, as the predefined partial data, the page which is included in the plurality of pages composing the data and which includes the predefined characters. Then in a case where the page a5 in the figure includes the predefined characters such as, for example, "Summary" or "Conclusion", the storage control section 105 deletes the data on the page a5 from the storage section 130 at timing at which the predefined time has passed from a time point at which the page a5 was displayed at the display section 110 while not deleting the data on the other pages.

Moreover, the storage control section 105 may specify, as the predefined partial data, the page which is included in the plurality of pages composing the data and which includes a number of characters equal to or greater than a predefined number of characters. Any page with a large number of characters is a page on which important details are written with high possibility, and thus the data can be deleted through the aforementioned processing at timing at which the predefined time has passed from the time point at which the user viewed the important portion of the data.

Moreover, instead of deleting the data from the storage section 130 at timing at which the predefined time has passed from the time point at which the page including the predefined characters or the page including the number of characters equal to or greater than the predefined number of characters (both of which are specified as the aforementioned predefined partial data) was displayed at the display section 110, the storage control section 105 may delete the data from the storage section 130 when a state in which this page is displayed at the display section 110 has continued for predefined time. Consequently, the data can be deleted in a case where the user has viewed the important portion of the data for the given time.

Moreover, the storage control section 105 may delete the data from the storage section 130 when the predefined time has passed from a time point at which all the pages composing the data was displayed at the display section 110. Consequently, it is possible to avoid a situation that the data is deleted from the storage section 130 in a state in which the user has viewed only part of the pages composing the data.

### <Supplement 3>

Moreover, after counting total time for which the display screen indicating the page specified through the processing described in Supplements 1 and 2 above was displayed at the display section 110, the storage control section 105 may delete the data from the storage section 130 when the counted total time has reached the predefined time or longer. The user scrolls (switches) the page indicated on the display screen to thereby view the various pages. By performing the aforementioned processing, the data can be deleted at timing at which total time for viewing the important pages of the data has reached the predefined time or more while the user is viewing various pages.

### <Supplement 4>

Moreover, when predefined time has passed from a time point at which the display screen indicating the one or the plurality of pages specified through the processing described in the Supplements 1 and 2 above was displayed at the display section 110, instead of deleting the data itself from the storage section 130, the storage control section 105 may delete the specified one or plurality of pages from the data composed of the plurality of pages stored in the storage section 130. That is, the storage control section 105 performs processing of changing the data composed of the plurality of pages stored in the storage section 130 to data obtained by excluding, from the aforementioned plurality of pages, the specified one or plurality of pages described above.

### < Sixth Embodiment>

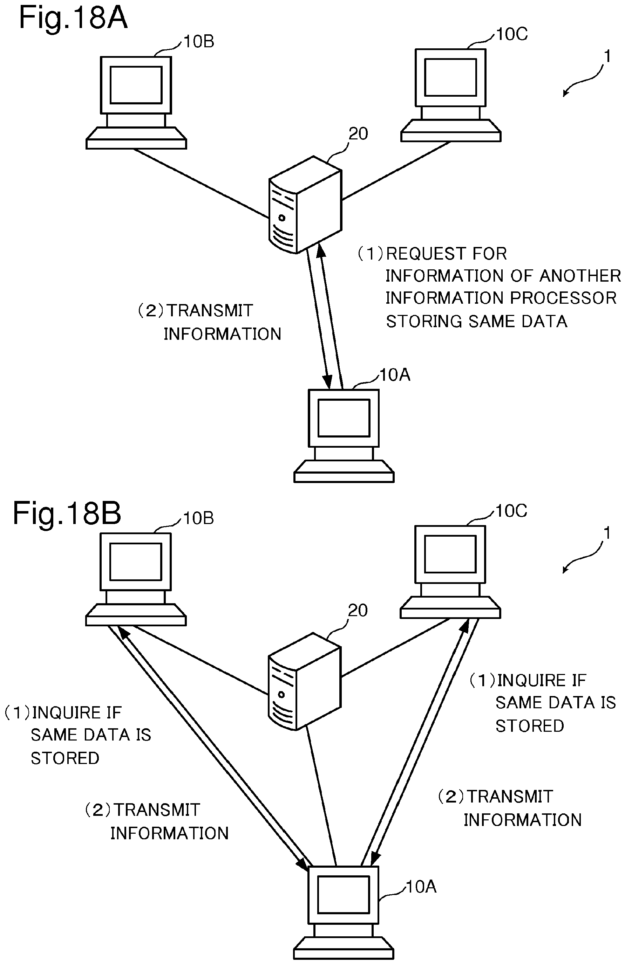

Figs. 18A and 18B are diagrams illustrating an outline of operation performed by an information processor 10 and a server 20 according to the sixth embodiment. As illustrated in these figures, the storage control section 105 performs processing of communicating with the server 20 or with the another information processor 10 and specifying the another information processor 10 which stores the same data as the data stored by the storage section 130 and received from the server 20.

Fig. 18A illustrates a case where the another information processor 10 which stores the same data as the data stored by the storage section 130 and received from the server 20 is specified through the communication made with the server 20. More specifically, the information processor 10 requests the server 20 for information of the another information processor 10 which stores the same data, and this information is generated on a server 20 side and then transmitted to the information processor 10.

On the other hand, Fig. 18B describes a case where processing of communicating with the information processor 10 and specifying the another information processor 10 which stores the same data as the data stored by the storage section 130 and received from the server 20 is performed. More specifically the information processor 10 performs processing of communicating with each of the plurality of another information processors 10 connected to the network N and inquiring whether or not the same data is stored.

The information processor 10 according to the sixth embodiment performs the processing of specifying the another information processor 10 which stores the same data through the methods described above in Figs. 18A and 18B, and in a case where the data has been deleted in the specified another information processor 10, the information processor 10 according to the sixth embodiment performs processing of deleting this data from the storage section 130.

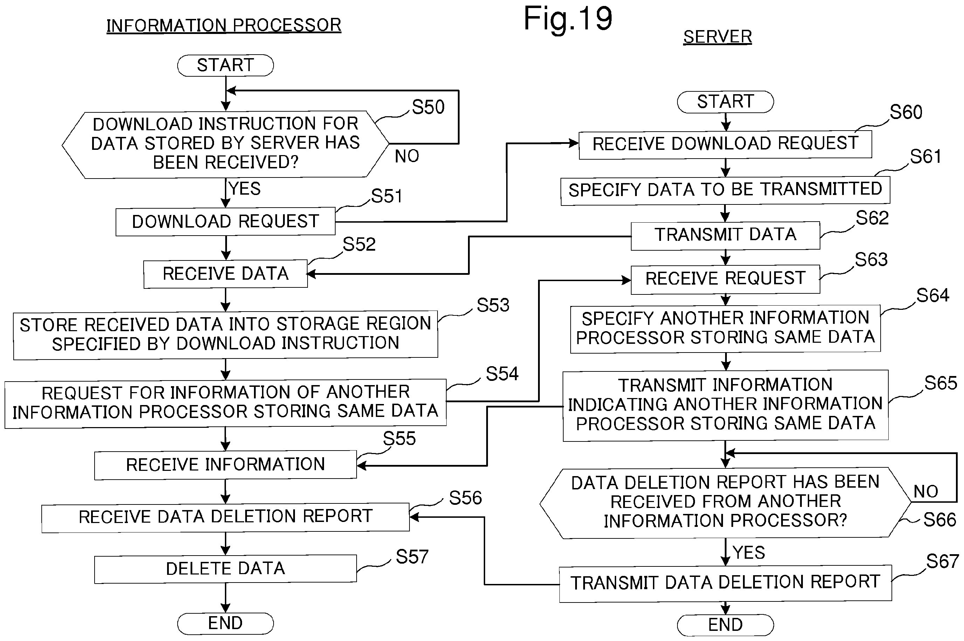

Fig. 19 is a flowchart illustrating a flow of detailed operation performed upon specifying the another information processor 10 which stores the same data through the method illustrated in Fig. 18A. When the reception section 103 has received a download instruction for the data stored by the server 20 (YES in step S50), the communication control section 102 causes the communication section 140 to transmit the download request to the server 20 (step S51).

When the communication section 240 of the server 20 has received the download request transmitted from the information processor 10 (step S60), the communication control section 202 of the server 20 specifies the data to be transmitted and indicated by the download request (step S61), and causes the communication section 240 to transmit the specified data (step S62).

Next, the communication control section 102 of the information processor 10 causes the communication section 140 to receive the data transmitted from the server 20 (step S52). Then the storage control section 105 stores, into the storage region of the storage section 130 indicated by the instruction received by the reception section 103, the data received by the communication section 140 through the processing of step S52 (step S53).

After processing of step S53, the communication control section 102 causes the communication section 140 to transmit a signal requesting for information of the another information processor 10 which stores the same data (step S54). When the server 20 has received the signal indicating this request (step S63), the communication control section 202 of the server 20 communicates with the plurality of information processors 10 connected to the server 20, and specifies the another information processor 10 which stores the same data (step S64). Then the communication control section 202 of the server 20 causes the communication section 240 to transmit the information indicating the specified information processor (step S65).

After processing of step S65, in a case where information indicating that this data was deleted in the another information processor 10 which stores the same data has been transmitted from the another information processor 10 and has been received by the server 20 (YES in step S66), the communication control section 202 of the server 20 causes the communication section 240 to transmit a data deletion report (step S67).

On the other hand, in a case where the information processor 10 has received the information transmitted in the processing of step S65 and the information transmitted in the processing of step S66 (steps S55 and 56), the storage control section 105 of the information processor 10 performs processing of deleting the aforementioned data from the storage section 130 (step S57).

As described above, with the information processor 10 and the server 20 according to the sixth embodiment of the present invention, in a case where the same data has been deleted in the another information processor 10 connected to the network N, it is possible for an individual to unintentionally delete this data from the information processor 10.

### <Supplement 1>

In a case where there is a plurality of another information processors 10 which stores the same data as the data stored in the storage section 130 and received from the server 20, the storage control section 105 may delete this data from the storage section 130 when the data has been deleted in a predefined ratio of the plurality of another information processors 10. For example, in a case where there are five another information processors 10 which store the same data, when the data has been deleted in 50% or more (for example, three), as the predefined ratio, of the information processors 10, the storage control section 105 deletes this data from the storage section 130.

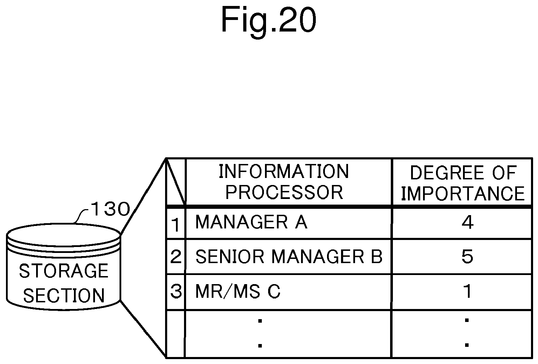

Moreover, the storage section 130 of the information processor 10 or the storage section 230 of the server 20 may previously store a score indicating a degree of importance for each of the plurality of information processors 10 which is capable of transmitting and receiving data to and from the server 20. Fig. 20 is a diagram illustrating one example of information stored in the storage section 130 of the information processor 10. In the example illustrated in this figure, for each of the plurality of information processors 10 connected to the server 20, a name of the information processor 10 and the score indicating the degree of importance of the information processor 10 are stored.

Then the storage control section 105 performs processing of summing up the aforementioned scores of the another information processors 10 whose data has been deleted and deleting the data from the storage section 130 when the summed value has reached a predefined value or more. Consequently, it is possible to delete the data from the information processor 10 in a case where the same data has been deleted in the information processor 10 which is included in the another information processors 10 connected to the network N and which has a high degree of importance.

### <Supplement 2>

The storage control section 105 may generate link information permitting access to the data which is the same as the data deleted from the storage section 130 and which is stored in the server 20, and store the generated link information into the storage region of the storage section 130 where the deleted data is stored. Consequently, even in a case where the data downloaded from the server 20 has been deleted from the individual information processor 10, it is thereafter easy for an individual to get access to the original data on the server 20.

### <Seventh Embodiment>

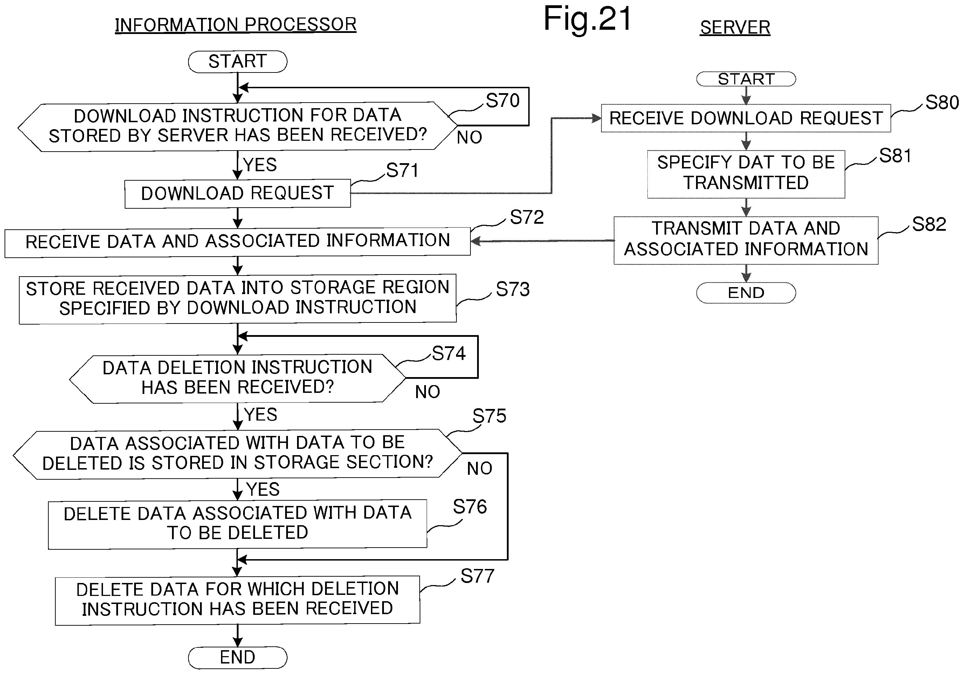

Fig. 21 is a flowchart illustrating a flow of operation performed by an information processor 10 and a server 20 according to the seventh embodiment. When the reception section 103 has received the download instruction for the data stored in the server 20 (YES in step S70), the communication control section 102 causes the communication section 140 to transmit the download request to the server 20 (step S71). The download request includes, in addition to information specifying the data to be downloaded, a command for transmitting associated information stored in the server 20 together with the data.

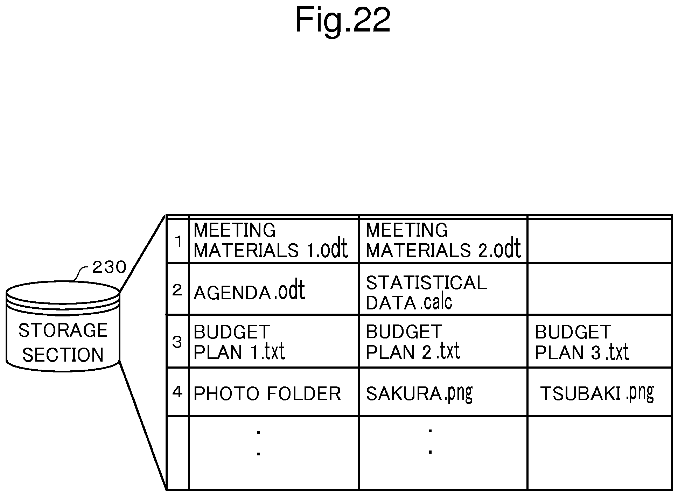

Fig. 22 is a diagram illustrating one example of associated information previously stored in the storage section 230 of the server 20. The associated information is information indicating the pieces of data mutually associated between the plurality of pieces of data stored in the server 20. In this figure, for example, the data of the "Meeting materials 1.odt" and the data of the "Meeting materials 2.odt" in the server 20 are associated with each other.

When the communication section 240 of the server 20 has received the download request transmitted from the information processor 10 (step S80), the communication control section 202 of the server 20 specifies the data to be transmitted and indicated by the download request (step S81). Then the communication control section 202 of the server 20 causes the communication section 240 to transmit the associated information stored in the storage section 230 together with the specified data (step S82).

The communication control section 102 of the information processor 10 causes the communication section 140 to receive the data and the associated information transmitted from the server 20 (step S72). Then the storage control section 105 causes the data received by the communication section 140 in the processing of step S72 to be stored into the storage region of the storage section 130 indicated by the instruction received by the reception section 103 (step S73).

In a case where the reception section 103 has received a data deletion instruction downloaded from the server 20 after the processing of step S73 (YES in step S74), the storage control section 105 of the information processor 10, based on the associated information received in the processing of step S72, performs processing of determining whether or not the data associated with the data to be deleted is stored in the storage section 130 (step S75). In a case where the data associated with the data to be deleted is stored (YES in step S75), the storage control section 105 causes the data associated with the data, for which the deletion instruction has been received, to be deleted from the storage section 130 together with the data for which the deletion instruction has been received (steps S76 and 77). On the other hand, in a case where the data associated with the data to be deleted is not stored (NO in step S75), the storage control section 105 causes only the data, for which the deletion instruction has been received, to be deleted from the storage section 130 (step S77).

As described above, with the information processor 10 and the server 20 according to the seventh embodiment of the present invention, in a case where the plurality of pieces of data has been downloaded from the server 20, only by inputting an instruction for deleting only one of the pieces of associated data, the other associated data can also be deleted from the storage section 130. Consequently, it is possible to avoid a situation that only one of the associated pieces of data is deleted while it is forgotten to delete the other data.

### <Supplement 1>

The storage control section 203 of the server 20 may analyze the plurality of pieces of data stored to thereby specify the two or more pieces of the data in which a predefined amount of same character strings is present and then may generate associated information defining that the specified two or more pieces of data are pieces of data associated with each other, and may also cause the storage section 230 to store this generated associated information. Since the pieces of data in which the predefined amount of same character strings is present indicate mutually associated details with high possibility, the data can be associated on a server 20 side by performing the aforementioned processing.

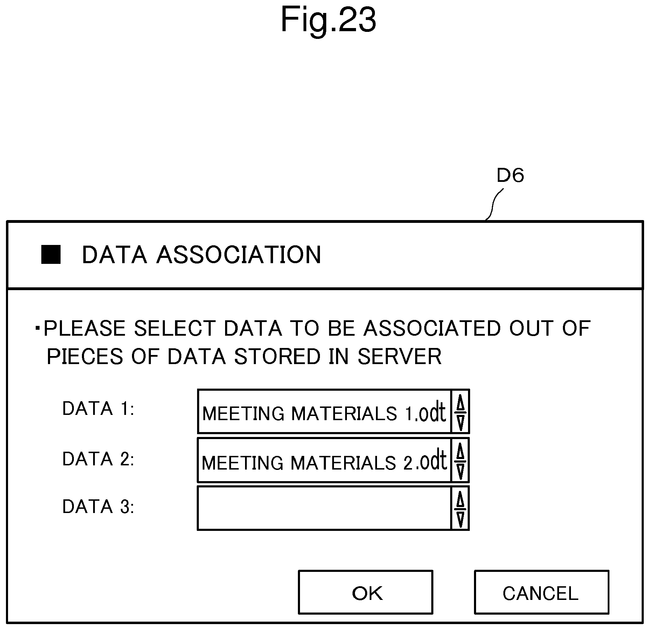

Moreover, the information processor 10 may display, at the display section 110, a display screen D6 as illustrated in Fig. 23 under control by the display control section 104. Based on operation received by the reception section 103 on the display screen D6, the storage control section 105 specifies, out of the plurality of pieces of data stored in the server 20, the two or more pieces of mutually associated data. Then the communication control section 102 causes the communication section 140 to transmit, to the server 20, information indicating the two or more pieces of associated data specified by the storage control section 105. The server 20 generates associated information based on the aforementioned information transmitted from the information processor 10. Consequently, the desired data can be associated in the information processor 10.

### <Supplement 2>

Before performing processing of deleting the data from the storage section 130 in steps S76 and 77 of Fig. 21, the storage control section 105 of the information processor 10 may perform processing of specifying whether or not the data to be deleted is stored in the server 20. More specifically, under control by the communication control section 102 of the information processor 10, whether or not the data to be deleted is stored in the server 20 is specified by making communication with the server 20 via the communication section 140.

In a case where the data to be deleted has been deleted from the server 20, the storage control section 105 does not perform the processing of deleting the data from the storage section 130. On the other hand, in a case where the data to be deleted is stored in the server 20, the storage control section 105 performs the processing of deleting the data from the storage section 130 (steps S76 and 77). Through the aforementioned processing, it is possible to avoid a situation that the data is also deleted in the information processor 10 in a state in which the data has been deleted from the server 20 and thus access to the data cannot be made.

### <Supplement 3>

The data received from the server 20 and stored into the storage section 130 by the communication section 140 may be data present in the directory stored in the server 20. In this case, the communication control section 102 of the information processor 10 may perform processing of determining whether or not the data present in the directory has been updated or added in the server 20 every predefined time. More specifically, the aforementioned determination processing is performed by performing the communication with the server 20 via the communication section 140. Then when the data present in the directory stored in the server 20 has been updated or added, the communication control section 102 causes the communication section 140 to receive the updated or added data from the server 20. Then the storage control section 105 causes the storage section 130 to store the updated or added data received from the server 20 by the communication section 140.

It is possible for an individual through the aforementioned processing to unintentionally reflect, in the information processor 10, the data updated or added on the server 20 after the data downloading.

### <Supplement 4>

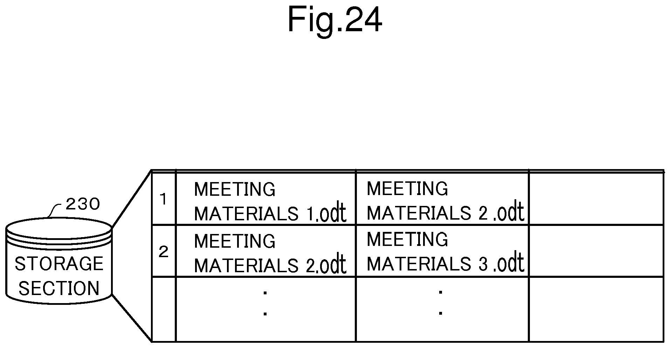

Fig. 24 is a diagram illustrating one example of the associated information previously stored in the storage section 230 of the server 20 in the example illustrated in Supplement 4. In the example illustrated in this figure, the data of the "Meeting materials 1.odt" and the data of the "Meeting materials 3.odt" are both associated with the data of the "Meeting materials 2.odt". On the other hand, the data of the "Meeting materials 2.odt" is associated with the pieces of data of both the "Meeting materials 1.odt" and the "Meeting materials 3.odt".

When the plurality of pieces of data associated with the one piece of data for which the reception section 103 has received the deletion instruction is present in the storage section 130, the storage control section 105 performs processing of deleting, from the storage section 130, the plurality of pieces of associated data together with this one piece of data. For example, in a case where the reception section 103 has received the deletion instruction for the data of the "Meeting materials 2.odt", the storage control section 105 deletes the pieces of data of the "Meeting materials 1.odt" and "Meeting materials 3.odt" together with the data of the "Meeting materials 2.odt" from the storage section 130. On the other hand, in a case where the reception section 103 has received the deletion instruction for the data of the "Meeting materials 1.odt" or the "Meeting materials 3.odt" associated with the only one piece of data, the storage control section 105 deletes the data of the "Meeting materials 2.odt" together with the data of the "Meeting materials 1.odt" or the "Meeting materials 3.odt" from the storage section 130.

Note that the present invention is not limited to the aforementioned configurations of the embodiments and thus various modifications can be made thereto.

The programs described in the above embodiments and modified examples may be recorded on a computer-readable, non-transitory recording medium, for example, a hard disk, a CD-ROM, a DVD-ROM, or a semiconductor memory.

Moreover, the configurations indicated in the above embodiments and modified examples may partially be combined.

## Claims

1. An information processor (10) comprising:
a communication section (140) capable of transmitting and receiving data to and from an external server (20);
a reception section (103) receiving an instruction from a user;
a communication control section (102) controlling data communication operation performed by the communication section (140), the communication control section (102) causing the communication section (140) to receive, from the server (20), data which is included in a plurality of pieces of data stored in the server (20) and which is specified by the instruction received by the reception section (103);
a storage section (130); and
a storage control section (105) causing the storage section (130) to store the data received from the server (20) by the communication section (140), wherein
in a case where the data received by the communication section (140) is the data received from a predefined server (20), the storage control section (105) deletes the data from the storage section (130) when predefined time has passed since predefined processing was performed on the data.

2. The information processor (10) according to claim 1, wherein
in a case where the data received by the communication section (140) is the data received from the predefined server (20), while defining processing of storing the data into the storage section (130) as the predefined processing, the storage control section (105) deletes the data from the storage section (130) when predefined time has passed since the data was stored into the storage section (130).

3. The information processor (10) according to claim 2, further comprising:
a display section (110); and
a display control section (104) controlling display operation performed by the display section (110), the display control section (104) causing the display section (110) to display a display screen on which a plurality of icons associated with the data stored in the storage section is arranged, wherein
in a case where an icon associated with the data received from the predefined server (20) by the communication section (140) is arranged on the display screen, the display control section (104) changes a display mode of the icon in accordance with time which has passed since the data was stored into the storage section (130).

4. The information processor (10) according to claim 3, wherein
the display control section (104) performs processing of changing the display mode of the icon by increasing brightness of a color composing the icon with passage of time from a time point at which the data was stored into the storage section (130).

5. The information processor (10) according to claim 3, wherein
the display control section (104) performs processing of changing the display mode of the icon by decreasing a size of the icon with passage of time from a time point at which the data was stored into the storage section (130).

6. The information processor (10) according to any of claims 3 to 5, wherein
in a case where the reception section (103) has received predefined operation performed on the icon, the display control section (104) performs processing of returning the display mode of the icon to a display mode provided at the time point at which the data was stored into the storage section (130).

7. The information processor (10) according to claim 6, wherein
when the display control section (104) has performed the processing of returning the display mode of the icon to the display mode provided at the time point at which the data was stored into the storage section (130) after the reception of the predefined operation performed on the icon by the reception section (103), the storage control section (105) resets the time which has passed since the data was stored into the storage section (130).

8. The information processor (10) according to any of claims 2 to 7, wherein
after the data was deleted from the storage section (130), the storage control section (105) generates link information permitting access to same data as the deleted data stored in the server (20), and stores the link information into a storage region which is included in a plurality of storage regions of the storage section (130) and in which the data was stored.

9. The information processor (10) according to any of claims 2 to 8, wherein
the server (20) stores, in association with the data, information for determining deletion time of the data,
upon causing the communication section (140) to receive, from the server (20), the data specified by the instruction received by the reception section (103), when the information is associated with the data, the communication control section (102) causes the communication section (140) to receive the information together with the data from the server (20), and
the storage control section (105) determines the deletion time of the data based on the information received by the reception section (103), and deletes the data from the storage section (130) when the determined deletion time has passed since the data was stored into the storage section (130).

10. The information processor (10) according to claim 9, wherein
the server (20) stores information indicating a degree of importance of the data as the information for determining the deletion time of the data, and
the storage control section (105) determines longer time as the deletion time of the data with an increase in the degree of importance indicated by the information received by the communication section (140).

11. An information processing method of controlling an information processor (10) comprising a storage section (130) and a communication section (140) capable of transmitting and receiving data to and from an external server (20), the information processing method (10) comprising:
a reception step of receiving an instruction from a user;
a communication control step of controlling data communication operation performed by the communication section (140), the communication control step causing the communication section (140) to receive, from the server (20), data which is included in a plurality of pieces of data stored in the server and which is specified by the instruction received in the reception step; and
a storage control step of causing the storage section (130) to store the data received from the server (20) by the communication section (140), wherein
in the storage control step, in a case where the data received by the communication section (140) is the data received from a predefined server (20), the data is deleted from the storage section (130) when predefined time has passed since the data was stored into the storage section (130).

12. The information processor (10) according to claim 1, further comprising:
a display section (110); and
a display control section (104) controlling display operation performed by the display section (110), the display control section (104) causing the display section (110) to display a display screen indicating the data specified by the instruction received by the reception section (103), wherein
in a case where the data received by the communication section (140) is the data received from the predefined server (20), while defining the display of the display screen indicating the data at the display section (110) as being the predefined processing, the storage control section (105) deletes the data from the storage section (130) when predefined time has passed from a time point at which the display screen indicating the data was displayed at the display section (110).

13. The information processor (10) according to claim 12, wherein
the display control section (104) causes the display section (110) to display the display screen indicating part of the data, and
in a case where the data received by the communication section (140) is the data received from the predefined server (20), the storage control section (105) specifies whether or not the part of the data indicated on the display screen includes predefined specific information, and when the part of the data indicated on the display screen includes the specific information, the storage control section (105) performs processing of deleting the data from the storage section (130) upon passage of predefined time from the time point at which the display screen was displayed at the display section (110).

14. The information processor (10) according to claim 13, wherein
the data is composed of a plurality of pages, and
the storage control section (105) specifies, as the specific information, the page which is included in the plurality of pages composing the data and which includes predefined characters, and deletes the data from the storage section (130) upon passage of predefined time from a time point at which the display screen indicating the specified page was displayed at the display section (110).

15. The information processor (10) according to claim 13, wherein
the data is composed of a plurality of pages, and
the storage control section (105) specifies, as the specific information, the page which is included in the plurality of pages composing the data and which includes a predefined number or more of characters, and the storage control section (105) deletes the data from the storage section (130) upon passage of predefined time from a time point at which the display screen indicating the specified page was displayed at the display section (110).

16. The information processor (10) according to claim 14 or 15, wherein
the storage control section (105) deletes the data from the storage section (130) when the display screen indicating the specified page was displayed and when a state in which the display screen is displayed at the display section (110) has continued for predefined time or longer.

17. The information processor (10) according to claim 14 or 15, wherein
the storage control section (105) counts total time for which the display screen indicating the specified page is displayed at the display section (110), and deletes the data from the storage section (130) when the total counted time has reached predefined time or longer.

18. The information processor (10) according to claim 12, wherein
the data is composed of a plurality of pages, and
upon passage of predefined time from a time point at which all the pages composing the data were displayed at the display section (110), the storage control section (105) deletes the data from the storage section (130).

19. The information processor (10) according to claim 12, wherein
the data is composed of a plurality of pages, and
the storage control section (105) specifies, as specific information, one or more of the plurality of pages composing the data, and deletes only the specified page from the data composed of the plurality of pages stored in the storage section (130) upon passage of predefined time from a time point at which the display screen indicating the specified page was displayed at the display section (110).

20. An information processing method of controlling an information processor (10) comprising a storage section (130), a display section (110), and a communication section (140) capable of transmitting and receiving data to and from an external server (20), the information processing method comprising:
a reception step of receiving an instruction from a user;
a communication control step controlling data communication operation performed by the communication section (140), the communication control step causing the communication section (140) to receive, from the server (20), the data which is included in a plurality of pieces of data stored in the server (20) and which is specified by the instruction received in the reception step;
a storage control step of causing the storage section (130) to store the data received from the server (20) by the communication section (140); and
a display control step of controlling display operation performed by the display section (110), the display control step causing the display section (110) to display a display screen indicating the data specified by the instruction received in the reception step, wherein
in the storage control step, in a case where the data received by the communication section (140) is the data received from a predefined server (20), the data is deleted from the storage section (130) upon passage of predefined time from a time point at which the display screen indicating the data was displayed at the display section (110).
